# EUROPEAN PATENT SPECIFICATION

(11) **EP 1 483 674 B1**
(45) Date of publication and mention of the grant of the patent: **05.04.2006**
(21) Application number: 03711337.0
(22) Date of filing: 28.02.2003
(51) Int. Cl.: G06F 13/38

(54) **USB HOST CONTROLLER**
USB HOST CONTROLLER
CONTROLEUR HOTE USB

(30) Priority: 13.03.2002 DE 10211054; 30.10.2002 US 283554
(43) Date of publication of application: 08.12.2004
(73) Proprietor: ADVANCED MICRO DEVICES, INC., Sunnyvale, California 94088-3453 (US)
(72) Inventor: HESSE, Siegfried, Kay, 01129 Dresden (DE); GULICK, Dale, E., Austin, TX 78738 (US)
(74) Representative: Pfau, Anton Konrad
(86) International application number: PCT/US2003/006288
(87) International publication number: WO 2003/079200

(56) References cited:
- EP-A- 1 102 173

## Description

### Technical Field

The invention generally relates to USB (Universal Serial Bus) host controllers, and in particular to the handling of the data traffic between USB devices and a system memory of a computer system.

### Background Art

The Universal Serial Bus was originally developed in 1995 to define an external expansion bus which facilitates the connection of additional peripherals to a computer system. The USB technique is implemented by PC (Personal Computer) host controller hardware and software and by peripheral friendly master-slave protocols and achieves robust connections and cable assemblies. USB systems are extendable through multi-port hubs.

In USB systems, the role of the system software is to provide a uniformed view of the input/output architecture for all applications software by hiding hardware implementation details. In particular, it manages the dynamic attach and detach of peripherals and communicates with the peripheral to discover its identity. During run time, the host initiates transactions to specific peripherals, and each peripheral accepts its transactions and response accordingly.

Hubs are incorporated to the system to provide additional connectivity for USB peripherals, and to provide managed power to attached devices. The peripherals are slaves that must react to request transactions sent from the host. Such request transactions include requests for detailed information about the device and its configuration.

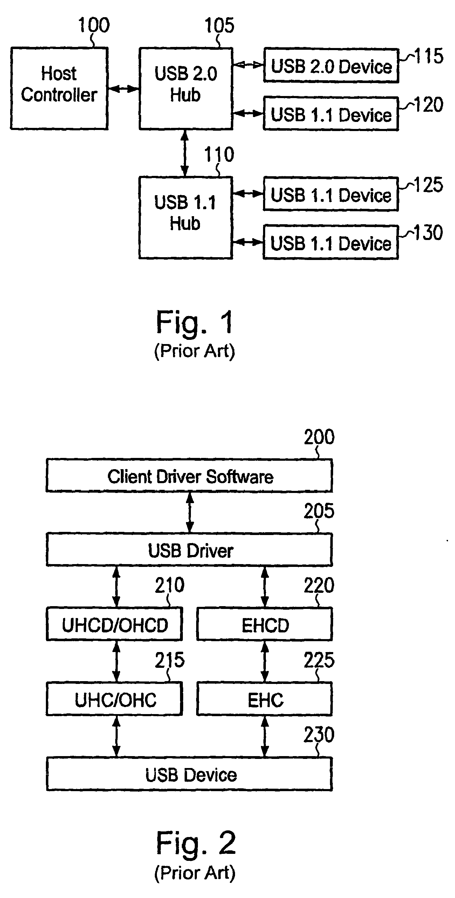

While these functions and protocols were already implemented in the USB 1.1 specification, this technique was still improved in order to provide a higher performance interface. FIG. 1 illustrates an example USB 2.0 system that comprises a host controller 100, a number of USB devices 115, 120, 125, 130, and two hubs 105, 110. In the system of FIG. 1, the hubs 105, 110 are introduced for increasing connectivity, but in other USB 2.0 systems, the USB devices can be connected directly to the host controller 100.

As mentioned above, USB 2.0 provides a higher performance interface, and the speed improvement may be up to a factor of 40. Moreover, as apparent from FIG. 1, USB 2.0 is backwards compatible with USB 1.1 because it allows for connecting USB 1.1 devices 120, 125, 130 to be driven by the same host controller 100. There may even be used USB 1.1 hubs 110.

As can be seen from FIG. 1, a USB 1.1 device 120 can be connected directly to a USB 2.0 hub 105. Moreover, it can also be connected directly to the host controller 100. This is made possible by the capability of USB 2.0 host controllers and hubs to negotiate higher as well as lower transmission speeds on a device-by-device basis.

Turning now to FIG. 2, the system software and hardware of a USB 2.0 system is illustrated. The system components can be organized hierachially by defining several layers as shown in the figure.

In the upper most layer, the client driver software 200 executes on the host PC and corresponds to a particular USB device 230. The client software is typically part of the operating system or provided with the device.

The USB driver 205 is a system software bus driver that abstracts the details of the particular host controller driver 210, 215 for a particular operating system. The host controller drivers 210, 220 provide a software layer between a specific hardware 215, 225, 230 and the USB driver 205 for providing a driver-hardware interface.

While the layers discussed so far are software implemented, the upper most hardware component layer includes the host controllers 215, 225. These controllers are connected to the USB device 230 that performs the end user function.

As apparent from the figure, there is one host controller 225 which is an enhanced host controller (EHC) for the high speed USB 2.0 functionality. This host controller operates in compliance with the EHCI (Enhanced Host Controller Interface) specification for USB 2.0. On the software side, host controller 225 has a specific host controller driver (EHCD) 220 associated.

Further, there are host controllers 215 for full and low speed operations. The UHCI (Universal Host Controller Interface) or OHCI (Open Host Controller Interface) are the two industry standards applied in the universal or open host controllers (UHC/OHC) 215 for providing USB 1.1 host controller interfaces. The host controllers 215 have assigned universal/open host controller devices (LHCD/OHCD) 210 in the lowest software level.

Thus, the USB 2.0 compliant host controller system comprises driver software and host controller hardware which must be compliant to the EHCI specification. While this specification defines the register-level interface and associated memory-resident data structures, it does not define nor describe the hardware architecture required to build a compliant host controller.

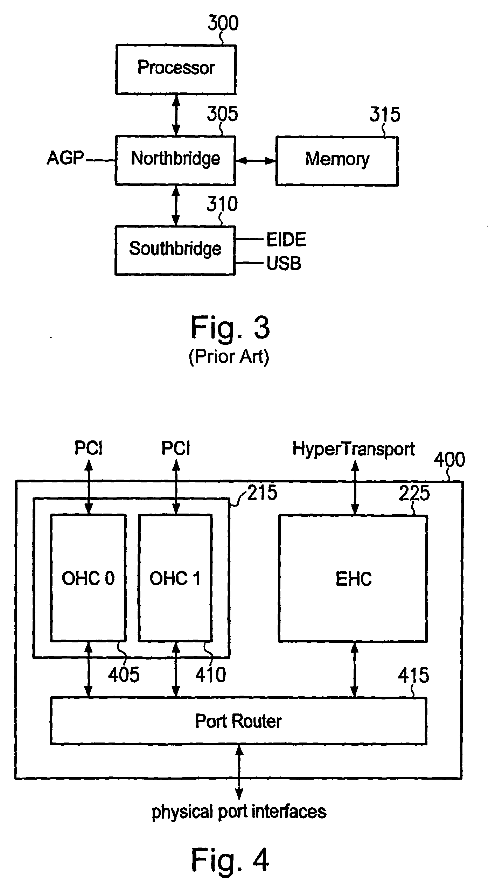

Referring now to FIG. 3, the hardware components of a common motherboard layout are depicted. The basic elements found on a motherboard may include the CPU (Central Processing Unit) 300, a northbridge 305, a southbridge 310, and system memory 315. The northbridge 305 usually is a single chip in a core-logic chipset that connects the processor 300 to the system memory 315 and the AGP (Accelerated Graphic Port) and PCI (Peripheral Component Interface) buses. The PCI bus is commonly used in personal computers for providing a data path between the processor and peripheral devices like video cards, sound cards, network interface cards and modems. The AGP bus is a high-speed graphic expansion bus that directly connects the display adapter and system memory 315. AGP operates independently of the PCI bus. It is to be noted that other motherboard layouts exist that have no northbridge in it, or that have a northbridge without AGP or PCI options.

The southbridge 310 is usually the chip in a system core-logic chipset that controls the IDE (Integrated Drive Electronics) or EIDE (Enhanced IDE) bus, the USB bus, that provides plug-n-play support, controls a PCI-ISA (Industry Standard Architecture) bridge, manages the keyboard/mouse controller, provides power management features, and controls other peripherals.

### Disclosure of Invention

An improved USB host controller, computer system and operation method is provided that define an architecture that may be suitable for implementing an EHCI-comgliant host controller for integration into an input/output hub chip, e.g. in a southbridge.

In one aspect of the invention, a USB host controller for handling the data traffic between at least one USB device and a system memory of a computer system is provided. The USB host controller comprises a data fetch unit for fetching data elements from the system memory. The USB host controller further comprises a storage unit for storing the fetched data elements, and a transaction processing unit connected to the storage unit for processing transactions sent to or received from the at least one USB device dependent on the fetched data elements stored in the storage unit. The data fetch unit and the transaction processing unit are arranged for operating asynchronously.

In a further embodiment the USB host controller further comprises an interface unit for handling data transfer to and from a memory controller of said system memory.

In a further embodiment said interface unit provides an interface to an HT I/O (HyperTransport technology Input/Output) bus.

In a further embodiment the USB host controller further comprises a cache for storing fetched data elements for re-access by said data fetch unit, said cache being capable of writing data elements back to said interface unit, wherein said interface unit is arranged for arbitrating between said data fetch unit and said cache.

In a further embodiment the USB host controller further comprises at least one DMA (Direct Memory Access) engine capable of transmitting data to and/or receiving data from said interface unit, wherein said interface unit is arranged for arbitrating between said data fetch unit and said at least one DMA engine.

In a further embodiment the USB host controller further comprises a cache (545) for storing fetched data elements for re-access by said data fetch unit.

In a further embodiment the USB host controller further comprises a transaction completion unit connected to said cache and said data fetch unit for updating data elements in the cache when completing transactions.

In a further embodiment said data fetch unit and said transaction completion unit operate asynchronously.

In a further embodiment said cache is connected to write data elements back to said system memory. In a further embodiment the USB host controller further comprises a transaction completion unit connected to said cache for controlling the cache to write data elements back to said system memory.

In a further embodiment the USB host controller said cache is a write-through cache. In a further embodiment said cache is an associative cache.

In a further embodiment said data fetch unit and said cache operate asynchronously.

In a further embodiment the USB host controller further comprises a transmit DMA (Direct Memory Access) engine acting as DMA read bus master for fetching data from said system memory.

In a further embodiment said transmit DMA engine is connected to said storage unit for inspecting the stored data elements and determining based on the inspected data elements which data is to be fetched from said system memory. In a further embodiment said transmit DMA engine comprises a FIFO (First In First Out) data buffer for storing the fetched data. In a further embodiment the USB host controller further comprises a receive DMA (Direct Memory Access) engine acting as DMA write bus master for writing data to said system memory. In a further embodiment said receive DMA engine comprises a FIFO (First In First Out) data buffer for storing the data to be written to said system memory.

In a further embodiment said data fetch unit is arranged for determining which data element is to be fetched, based on timing information and register settings. In a further embodiment the USB host controller is a USB-2 (Universal Serial Bus revision 2) host controller that complies with the EHCI (Enhanced Host Controller Interface) specification. In a further embodiment the USB host controller further comprises an interface unit for handling data transfer to and from a memory controller of said system memory; and a register unit connected to said interface unit, the register unit containing a plurality of EHCI registers storing bus configuration data, host controller capability data, operational mode data and host controller status information. In a further embodiment the USB host controller has a first and a second clock domain, wherein said data fetch unit and said storage unit are located in the first clock domain, said transaction processing unit is located in the second clock domain, and the frequency of the second clock domain is lower than the frequency of the first clock domain.

In a further embodiment the USB host controller further comprises a timing unit being in phase correspondance to the clock timing of the data transfer to said at least one USB device; and a conversion unit for retrieving data elements from said storage unit and converting the received data elements to transaction items required for processing respective transactions, wherein the timing unit is connected to a control unit of said storage unit and said conversion unit

In a further embodiment said transaction processing unit comprises a packet handler unit for constructing USB bus operations to transmit data and handshakes to said at least one USB device, and disassembling received USB packets, said packet handler unit being connected to said timing unit.

In a further embodiment the USB host controller has a first and a second clock domain, wherein said data fetch unit, storage unit and conversion unit are located in the first clock domain, and said transaction processing unit and said timing unit are located in the second clock domain. In a further embodiment said transaction processing unit comprises a packet building unit for constructing USB bus operations to transmit data and handshakes to said at least one USB device; and a packet decoding unit for disassembling received USB packets.

In a further embodiment the USB host controller further comprises a conversion unit for receiving data elements from said storage unit and converting the received data elements to transaction items, wherein said packet building unit is connected to said conversion unit for receiving said transaction items.

In a further embodiment the USB host controller further comprises a transaction completion unit connected to said data fetch unit and capable of initiating write back operations of data elements to said system memory, wherein said packet decoding unit is connected to said transaction completion unit for providing data to the transaction completion unit necessary to decide whether to initiate a write back operation.

In a further embodiment said transaction processing unit further comprises a CRC (Cyclic Redundancy Check) unit connected to said packet building unit and said packet decoding unit for detecting errors in the transmitted and received data.

In another aspect of the invention, a computer system is provided that has a system memory and is connectable to a USB device. The computer system includes an integrated chip comprising a USB host controller according to one of the above identified embodiments.

According to a further aspect of the invention, there is provided a method of operating a USB host controller in a computer system connected to a USB device. The method comprises fetching descriptors from a system memory of the computer system, storing the fetched descriptors, and processing transactions to and/or from the USB device based on transaction items generated using the stored descriptors. The fetching and processing steps are performed asynchronously.

In a further embodiment the method further comprises handling data transfer to and from a memory controller of said system memory.

In a further embodiment said step of handling the data transfer is performed by an interface to an HT I/O (HyperTransport technology Input/Output) bus.

In a further embodiment the method further comprises operating at least one DMA (Direct Memory Access) engine for transmitting data to and/or receiving data from said interface.

In a further embodiment the method further comprises storing the fetched descriptors in a cache (545) for re-access.

In a further embodiment the method further comprises updating descriptors in the cache when completing transactions.

In a further embodiment said fetching and said updating are performed asynchronously.

In a further embodiment the method further comprises writing descriptors back to said system memory.

In a further embodiment said steps of fetching descriptors and storing the fetched descriptors in the cache are performed asynchronously.

In a further embodiment the method further comprises operating a transmit DMA (Direct Memory Access) engine as DMA read bus master for fetching data from said system memory.

In a further embodiment the method further comprises operating said transmit DMA engine for inspecting the stored fetched descriptors and determining based on the inspected descriptors which data is to be fetched from said system memory.

In a further embodiment the method further comprises storing the fetched data in a FIFO (First In First Out) data buffer.

In a further embodiment the method further comprises operating a receive DMA (Direct Memory Access) engine as DMA write bus master for writing data to said system memory.

In a further embodiment the method further comprises storing the data to be written to said system memory in a FIFO (First In First Out) data buffer.

In a further embodiment the method further comprises handling data transfer to and from a memory controller of said system memory; and storing bus configuration data, host controller capability data, operational mode data and host controller status information in a register unit containing a plurality of EHCI registers.

In a further embodiment said USB host controller has a first and a second clock domain, said fetching and storing steps are driven by the first clock, said processing step is driven by the second clock, and the frequency of the second clock domain is lower than the frequency of the first clock domain.

In a further embodiment the method further comprises providing a clock signal in phase correspondance to the clock timing of the data transfer to said USB device; retrieving stored fetched descriptors; and converting the received decrsiptors to transaction items required for processing respective transactions, wherein the storing step and said converting step are controlled by said clock signal.

In a further embodiment said step of processing transactions comprises constructing USB bus operations to transmit data and handshakes to said USB device; and disassembling received USB packets, wherein said steps of constructing and disassembling are performed under control of said clock signal

In a further embodiment said USB host controller has a first and a second clock domain, and said fetching, storing and converting steps are driven by the first clock, said processing step is driven by the second clock.

In a further embodiment said step of processing transactions comprises constructing USB bus operations to transmit data and handshakes to said USB device; and disassembling received USB packets.

In a further embodiment the method further comprises accessing stored fetched descriptors; and converting the accessed descriptors to transaction items, wherein the step of constructing USB bus operations comprises accessing said transaction items.

In a further embodiment the method further comprises initiating write back operations of descriptors to said system memory, wherein said step of disassembling comprises providing data necessary to decide whether to initiate a write back operation.

In a further embodiment said constructing and disassembling steps comprise performing a CRC (Cyclic Redundancy Check) check for detecting errors in the transmitted and received data.

### Brief Description of Drawings

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
- FIG. 1: illustrates an example USB 2.0 compliant system;
- FIG. 2: illustrates the hardware and software component layers in the system of FIG. 1;
- FIG. 3: illustrates a common motherboard layout;
- FIG. 4: illustrates the main components of the USB 2.0 compliant host controller according to an embodiment;
- FIG. 5: is a block diagram illustrating the components of the enhanced host controller that is a component of the arrangement of FIG. 4;
- FIG. 6: illustrates the descriptor storage unit of the enhanced host controller of FIG. 5;
- FIG. 7: is a flowchart illustrating the transmission process according to an embodiment; and
- FIG. 8: is a flowchart illustrating the reception process according to an embodiment

### Modes for Carrying Out the Invention

The illustrative embodiments of the present invention will be described with reference to the figure drawings wherein like elements and structures are indicated by like reference numbers.

Referring now to the drawings and particularly to FIG. 4, the main components of a USB 2.0 compliant host controller 400 according to an embodiment are shown. In general, the host controller consists of three main components: the enhanced host controller (EHC) 225, one or more companion host controllers 215, and the port router 415.

The enhanced host controller 225 handles the USB 2.0 high speed traffic. Additionally, it controls the port router 415.

In the companion host controller unit 215 of the present embodiment, there are two OHCI compliant host controllers, OHC0 405 and OHCl 410. These controllers handle all USB 1.1 compliant traffic and may contain the legacy keyboard emulation for non-USB aware environments.

The port router 415 assigns the physical port interfaces their respective owners. This ownership is controlled by EHC registers, and per default all ports are routed to the companion host controllers in order to allow for a system with only USB 1.1 aware drivers to function. If a USB 2.0 aware driver is present in the system it will assign the ports to either a companion host controller 405, 4 10 for low and full speed devices and hubs (USB 1.1 traffic) or to the EHC 225 for high speed devices and hubs.

That is, the USB 2.0 host controller shown in FIG. 4 complies with the EHCI specification and allows for using existing OHCI USB 1.1 host controllers with the minimum alteration necessary to interface to the port router block 415, instead of USB 1.1 physical devices.

Plug-n-play configuration may be handled separately by each host controller 405, 410, 225. There may be an EHCI-imposed restriction that the OHCI controllers 215 must have lower function numbers than the EHCI controller 225.

The USB 2.0 compliant host controller of FIG. 4 may be defined as hardware architecture to implement an EHCI-compliant host controller for integration into a southbridge 310. The host controller then resides between the USB-2 analog input/output pins and a link interface module for interfacing upstream towards system memory, e.g. interfacing to a northbridge if there is one present in the system. This interface may be an internal HyperTransport™ interface. The HyperTransport technology is a high speed, high performance point-to-point link for interconnecting integrated circuits on a motherboard. It can be significantly faster than a PCI bus for an equivalent number of pins. The HyperTransport technology is designed to provide significantly more bandwidth than current technologies, to use low-latency responses, to provide low pin count, to be compatible with legacy PC buses, to be extensible to new system network architecture buses, to be transparent to operating systems, and to offer little impact on peripheral drivers.

Thus, in the embodiment of FIG. 4 a HyperTransport-based USB host controller is provided where an enhanced host controller 225 is responsible for handling all high speed USB traffic as well as controlling port ownership for itself and the companion controllers 215 via the port router 415. After power-on reset or software-controlled reset of the EHC 225, it may default to a state where all ports are owned and controlled by the companion host controllers 215, all operational registers are at their respective default values, and the EHC 225 is halted, i.e. it neither fetches descriptors from system memory 315 nor issues any USB activity. In normal operation, the EHC 225 may process isochronous and interrupt transfers from a periodic list, bulk and control from an asynchronous list Either list can be empty or its processing disabled by software.

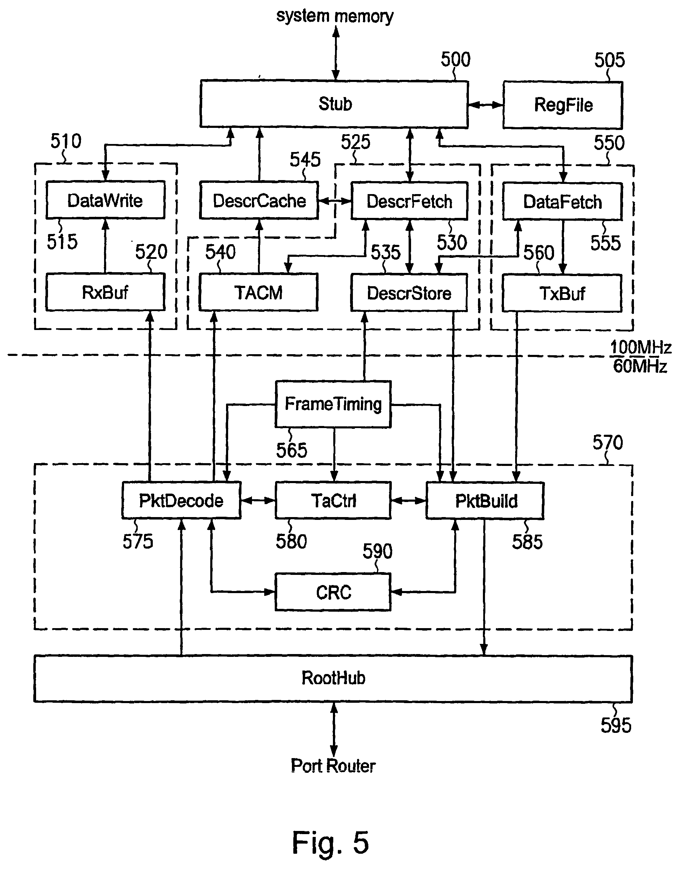

Turning now to FIG. 5, the components of the enhanced host controller EHC 225 are depicted in more detail. As can be seen from the figure, the enhanced host controller 225 can be divided into a 100 MHz core clock domain and a 60 MHz clock domain. While the 60 MHz clock domain includes the circuitry for routing transactions to physical devices, the 100 MHz clock domain does the actual descriptor processing. It is to be noted that in other embodiments, the domains may have clock rates different from the above values of 100 MHz and 60 MHz. In these embodiments, the descriptor processing domain clock still has a higher frequency than the other domain.

In the 100 MHz domain, the handling of the data traffic to and from the system memory is done by the stub 500. The stub 500 assigns the internal sources and sinks to respective HyperTransport streams, i.e. posted requests, non-posted requests, responses. The stub 500 arbitrates the internal HyperTransport interface between all internal bus masters, i.e. the receive DMA (Direct Memory Access) engine 510, the descriptor cache 545, the descriptor processing unit 525 and the transmit DMA engine 550. Thus, the stub 500 arbitrates between descriptor fetching, writing descriptors back, receiving and transmitting data.

The stub 500 is connected to a register file 505 that contains the EHCI registers. In the present embodiment, the EHCI registers store data with respect to the PCI configuration, the host controller capabilities and the host controller operational modes.

The descriptor processing unit 525 is connected to stub 500 and consists of three subunits: the descriptor fetching unit (DescrFetch) 530, the descriptor storage unit (DescrStore) 535 and the transaction completion machine (TACM) 540. The descriptor fetching unit 530 determines, based on timing information and register settings, which descriptor is to be fetched or pre-fetched next and sends the request to the stub 500 and/or to the descriptor cache 545. When it receives the descriptor it sends it to the descriptor storage unit 535.

The descriptor storage unit 535 holds the pre-fetched descriptors. By performing storage management, its main function is to provide a storage capacity to average memory access legacies for descriptor fetches.

The transaction completion machine 540 is connected to the descriptor fetching unit 530 for managing the status write-back to descriptors. For this purpose, the transaction completion machine 540 is connected to the descriptor cache 545.

This cache contains descriptors which have been pre-fetched by the descriptor fetching unit 530 for fast re-access. The descriptors held in the descriptor cache 545 are updated by the transaction completion machine 540 and eventually written back to system memory, via stub 500. The descriptor cache 545 may be fully associative with write-through characteristics. It may further control the replacement of the contents of each microframe.

As apparent from FIG. 5, in the 100 MHz clock domain there are further provided the transmit DMA engine 550 and the receive DMA engine 510. The transmit DMA engine 550 consists of a data fetching unit (DataFetch) 555 and a data transmit buffer (TxBuf) 560. The data fetching unit 555 is the DMA read bus master and inspects the entries in the descriptor storage unit 535 of the descriptor processing unit 525. The data fetching unit 555 prefetches the corresponding data and forwards it to the data transmit buffer 560.

The data transmit buffer 560 may be a FIFO (first in first out) buffer, and its function corresponds to that of the descriptor storage unit 535 in that it allows to pre-fetch enough data for outgoing transactions to cover the memory system latency. The data transmit buffer 560 may further serve as clock domain translator for handling the different clocks of the domains.

The receive DMA engine 510 consists of the data writing unit (DataWrite) 515 which serves as DMA write bus master unit for moving the received data that are stored in the data receive buffer (RxBuf) 520, to its respective place in system memory. The data receive buffer 520 may be a simple FIFO buffer and may also serve as clock domain translator.

In the 60 MHz clock domain, there is provided a frame timing unit (FrameTiming) 565 that is the master USB time reference. One clock tick of the frame timing unit corresponds to an integer (e.g. 8 or 16) multiple of USB high speed bit times. The frame timing unit 565 is connected to the descriptor storage unit 535 and to the packet handler block 570.

The packet handler block 570 consists of a packet building unit (PktBuild) 585 that constructs the necessary USB bus operations to transmit data and handshakes, and a packet decoder (PktDecode) 575 that disassembles received USB packets. Further, a transaction controller (TaCtrl) 580 is provided that supervises the packet building unit 585 and the packet decoder 575. Further, the packet handler 570 comprises a CRC (cyclic redundancy check) unit 590 for generating and checking CRC data for transmitted and received data.

The packet building unit 585 and the packet decoder 575 of the packet handler 570 are connected to the root hub 595 that contains port specific control registers, connect detection logic and scatter/gather functionality for packets between the packet handler 570 and the port router.

As mentioned above, the stub 500 is the responsible unit for attachment of the USB controller to the internal HyperTransport interface. Since there are several requesters 510, 545, 525, 550 using the HyperTransport interface, the stub 500 will include arbitration logic to fairly and efficiently grant the different units access to the interface. While there are four bus masters that may issue HyperTransport source requests, there is only one bus slave that will be the addressee of the HyperTransport target request: the register file unit 505.

Since the internal HyperTransport interface itself already distinguishes between a device target and a device source interface, there may be no need for arbitration on the target interface side, as this can be directly mapped to the register file unit 505. However, the HyperTransport source interface may need arbitration. Due to the number of HyperTransport buffers in the present embodiment that are assigned to the enhanced host controller 225 there may be as many as six read requests on flight at any time, i.e. the internal HyperTransport interface will be ready to consume six read requests before the first one may be answered. In other embodiments, the number of outstanding requests may differ from the value of six. It is assumed that the internal HyperTransport interface can consume write requests as fast as they are generated. The stub 500 will assign the responses there respective destinations by observing the HyperTransport response source tag. Each unit may use a range of source tags with the most significant two bits being unique for each unit.

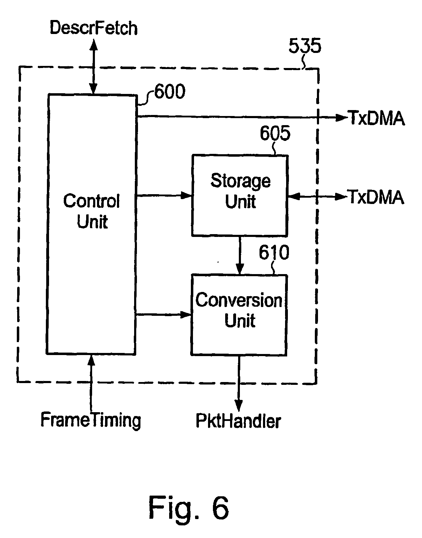

Turning now to FIG. 6, the descriptor storage unit 535 is depicted in more detail. It comprises a control unit 600 that receives a timing signal from the frame timing unit 565 and controls the data traffic from and to the descriptor fetching unit 530. Further, the control unit 600 is connected to the transmit DMA engine 550, and in particular to the data fetching unit 555 for providing stored descriptors for memory access.

The descriptor storage unit 535 further comprises a storage unit 605 that actually provides the memory for the descriptors. The storage unit 605 again is connected to the transmit DMA engine 550, and to a conversion unit 610 of the descriptor storage unit 535. The conversion unit 610 is controlled by the control unit 600 to retrieve descriptors from the storage unit 605 and convert the received descriptors to transaction items required for processing respective transactions. For this purpose, the conversion unit 610 is connected to the packet handler 570.

Turning now back to FIG. 5, it is apparent from the structure of the host controller and the discussion above that the descriptor fetching unit 530, the packet handler 570 that actually processes the transactions, and the transmit and receive DMA engines 550, 510 operate asynchronously.

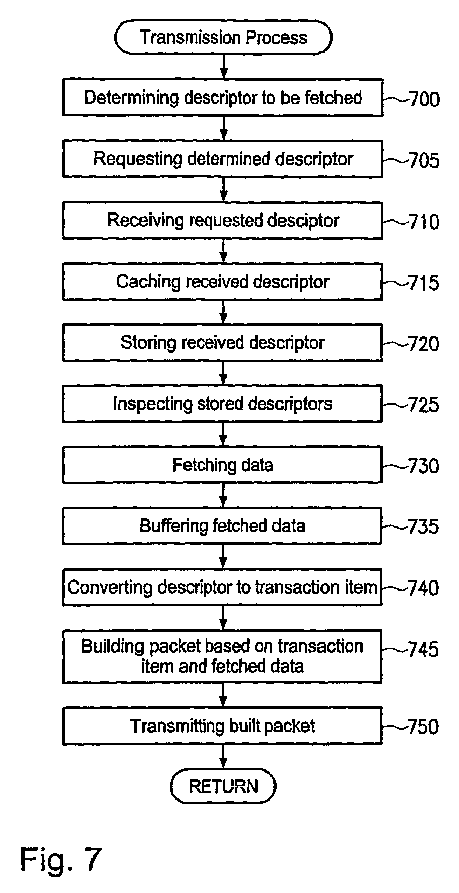

The transmission process according to an embodiment will now be described with reference to the flowchart of FIG. 7. In step 700, the descriptor fetching unit 530 determines which descriptor is to be fetched. The determined descriptor is then requested in step 705 by the descriptor fetching unit 530, and the requested descriptor is received in step 710. Once the descriptor fetching unit 530 has received the requested descriptor, it forwards the descriptor to the descriptor cache 545 in step 715, and to the descriptor storage unit 535 in step 720.

When data is to be fetched, the data fetching unit 555 of the transmit DMA engine 550 inspects the entries of the descriptor storage unit 535 in step 725, and fetches the corresponding data in step 730. The fetched data is then buffered in the data transmit buffer 560 in step 735.

In step 740, the conversion unit 610 of the descriptor storage unit 535 converts the respective stored descriptor to generate a transaction item, and the packet builder 585 builds a packet in step 745 based on the generated transaction item and the fetched data stored in the data transmit buffer 560. The built packet is then transmitted in step 750 by means of the root hub 595.

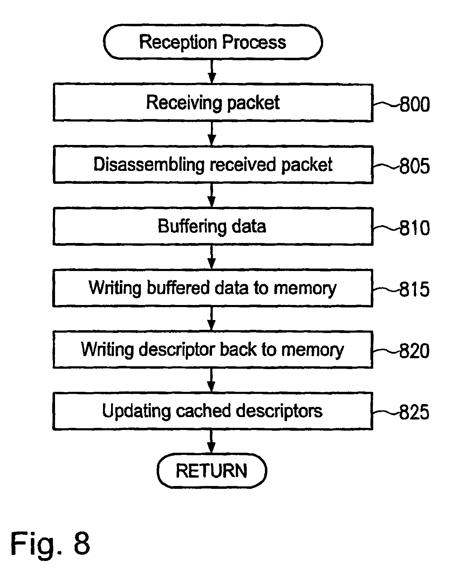

FIG. 8 describes the reception process that starts with step 800 of receiving a packet in the packet decoder 575 of the packet handler 570. The packet decoder 575 disassembles in step 805 the received packet and sends the data to the data receive buffer 520 where it is stored in step 810. Under control of the data writing unit 515, the buffered data is written to memory in step 815. Further, the transaction completion machine 540 may be informed by the packet decoder 575 to initiate a descriptor write-back operation in step 820. Then, the cached descriptors are updated in step 825.

### Industrial Applicability

Evidently, the present invention may advantageously be applied to industrial processes and products.

## Claims

1. A USB (Universal Serial Bus) host controller for handling the data traffic between at least one USB device (330) and a system memory (115) of a computer system, the USB host controller comprising:
a data fetch unit (530) for fetching data elements from said system memory;
a storage unit (535, 605) for storing the fetched data elements; and
a transaction processing unit (570) connected to said storage unit for processing transactions sent to or received from said at least one USB device dependent on the fetched data elements stored in said storage unit,
wherein said data fetch unit and said transaction processing unit are arranged for operating asynchronously.

2. The USB host controller of claim 1, wherein said fetched data elements are descriptors, and the USB host controller further comprises:
a conversion unit (610) for receiving descriptors from said storage unit and converting the received descriptors to transaction items,
wherein said transaction processing unit is arranged for receiving said transaction items from said conversion unit and processing the transactions based on the received transaction items.

3. The USB host controller of claim 1, wherein said data fetch unit is arranged for outputting a request for requesting a data element, and receiving the requested data element

4. The USB host controller of claim 3, further comprising an interface unit (500) for handling data transfer to and from a memory controller (105) of said system memory,
wherein said data fetch unit is arranged for outputting said request to said interface unit

5. The USB host controller of claim 3, further comprising a cache (545) for storing fetched data elements for re-access by said data fetch unit,
wherein said data fetch unit is arranged for outputting said request to said cache.

6. A computer system having a system memory (115) and being connectable to a USB device (330), the computer system including a USB (Universal Serial Bus) host controller according to claim 1.

7. A method of operating a USB (Universal Serial Bus) host controller in a computer system connected to a USB device (330), the method comprising:
fetching (700-710) descriptors from a system memory of said computer system;
storing (720) the fetched descriptors; and
processing (745) transactions to and/or from said USB device based on transaction items generated using the stored descriptors,
wherein said fetching and processing steps are performed asynchronously.

8. The method of claim 7, wherein the step of fetching descriptors comprises:
outputting (705) a request for requesting a descriptor, and
receiving (710) the requested descriptor.

9. The method of claim 8, further comprising:
storing (715) the fetched descriptors in a cache (545) for re-access,
wherein said step of outputting said request is performed by outputting the request to said cache
.

10. The method of claim 7, further comprising:
determining (700) which descriptor is to be fetched, based on timing information and register settings.

## Patentansprüche

1. USB- (universelle serielle Bus-) Host-Steuerung zum Handhaben des Datenverkehrs zwischen mindestens einem USB-Gerät (330) und einem Systemspeicher (115) eines Computersystems, wobei die USB-Host-Steuerung umfasst:
eine Datenabholeinheit (530) zum Abrufen von Datenelementen aus dem Systemspeicher;
eine Speichereinheit (535, 605) zum Speichern der abgerufenen Datenelemente; und
eine Transaktionsverarbeitungseinheit (570), die mit der Speichereinheit verbunden ist, um Transaktionen, die von dem mindestens einen USB-Gerät gesendet oder davon erhalten werden, abhängig von den in der Speichereinheit gespeicherten Datenelementen zu verarbeiten,
wobei die Datenabholeinheit und die Transaktionsverarbeitungseinheit für einen asynchronen Betrieb ausgebildet sind.

2. USB-Host-Steuerung nach Anspruch 1, wobei die abgeholten Datenelemente Deskriptoren sind und wobei die USB-Host-Steuerung ferner umfasst:
eine Umwandlungseinheit (610) zum Erhalten der Deskriptoren von der Speichereinheit und zum Umwandeln der empfangenen Deskriptoren in Transaktionselemente,
wobei die Transaktionsverarbeitungseinheit ausgebildet ist, die Transaktionselemente von der Umwandlungseinheit zu empfangen und die Transaktionen auf der Grundlage der empfangenen Transaktionselemente zu verarbeiten.

3. USB-Host-Steuerung nach Anspruch 1, wobei die Datenabholeinheit ausgebildet ist, eine Anforderung zum Anfordern eines Datenelements auszugeben und das angeforderte Datenelement zu empfangen.

4. USB-Host-Steuerung nach Anspruch 3, die ferner eine Schnittstelleneinheit (500) zum Handhaben des Datentransfers zu und von einer Speichersteuerung (105) des Systemspeichers umfasst,
wobei die Datenabholeinheit zum Ausgeben der Anforderung an die Schnittstelleneinheit ausgebildet ist.

5. USB-Host-Steuerung nach Anspruch 3, die ferner einen Zwischenspeicher (545) zum Speichern abgerufener Datenelemente für einen erneuten Zugriff durch die Datenabholeinheit umfasst,
wobei die Datenabholeinheit zum Ausgeben der Anforderung an den Zwischenspeicher ausgebildet ist.

6. Computersystem mit einem Systemspeicher (115), an das ein USB-Gerät (330) anschließbar ist, wobei das Computersystem eine USB- (universelle serielle Bus-) Host-Steuerung gemäß Anspruch 1 aufweist.

7. Verfahren zum Betreiben einer USB- (universelle serielle Bus-) Host-Steuerung in einem Computersystem, das mit einem USB-Gerät (330) verbunden ist, wobei das Verfahren umfasst:
Abrufen (700 bis 710) von Deskriptoren aus einem Systemspeicher des Computersystems;
Speichern (720) der abgerufenen Deskriptoren; und
Verarbeiten (745) von Transaktionen zu und/oder von dem USB-Gerät auf der Grundlage von Transaktionselementen, die unter Anwendung der gespeicherten Deskriptoren erzeugt sind;
wobei die Schritte des Abrufens und Verarbeitens asynchron ausgeführt werden.

8. Verfahren nach Anspruch 7, wobei der Schritt des Abrufens von Deskriptoren umfasst:
Ausgeben (705) einer Anforderung zum Anfordern eines Deskriptors; und
Empfangen (710) des angeforderten Deskriptors.

9. Verfahren nach Anspruch 8, das ferner umfasst:
Speichern (715) der abgerufenen Deskriptoren in einem Zwischenspeicher (545) für einen erneuten Zugriff,
wobei der Schritt des Ausgebens der Anforderung ausgeführt wird, indem die Anforderung an den Zwischenspeicher ausgegeben wird
.

10. Verfahren nach Anspruch 7, das ferner umfasst:
Bestimmen (700), welcher Deskriptor abzuholen ist, auf der Grundlage einer Zeitablaufinformation und Registereinstellungen.

## Revendications

1. Contrôleur hôte de bus USB (bus série universel) destiné à gérer le trafic de données entre au moins un dispositif de bus USB (330) et une mémoire de système (115) d'un système informatique, le contrôleur hôte de bus USB comprenant :
une unité de récupération de données (530) destinée à récupérer des éléments de données à partir de ladite mémoire de système,
une unité de mémorisation (535, 605) destinée à mémoriser les éléments de données récupérés, et
une unité de traitement de transaction (570) reliée à ladite unité de mémorisation afin de traiter des transactions émises vers ledit au moins un dispositif de bus USB, ou reçues de celui-ci, selon les éléments de données récupérés mémorisés dans ladite unité de mémorisation,
dans lequel ladite unité de récupération de données et ladite unité de traitement de transaction sont agencées pour fonctionner de façon asynchrone.

2. Contrôleur hôte de bus USB selon la revendication 1, dans lequel lesdits éléments de données récupérés sont des descripteurs, et le contrôleur hôte de bus USB comprend en outre :
une unité de conversion (610) destinée à recevoir des descripteurs de ladite unité de mémorisation et à convertir les descripteurs reçus en articles de transactions,
dans lequel ladite unité de traitement de transaction est agencée pour recevoir lesdits articles de transactions de ladite unité de conversion et à traiter les transactions d'après les articles de transactions reçus.

3. Contrôleur hôte de bus USB selon la revendication 1, dans lequel ladite unité de récupération de données est agencée pour fournir en sortie une requête pour demander un élément de données, et recevoir l'élément de données requis.

4. Contrôleur hôte de bus USB selon la revendication 3, comprenant en outre une unité d'interface (500) destinée à gérer un transfert de données vers et depuis un contrôleur de mémoire (105) de ladite mémoire de système,
dans lequel ladite unité de récupération de données est agencée pour fournir en sortie ladite demande à ladite unité d'interface.

5. Contrôleur hôte de bus USB selon la revendication 3, comprenant en outre une antémémoire (545) destinée à mémoriser des éléments de données récupérés en vue d'un nouvel accès par ladite unité de récupération de données,
dans lequel ladite unité de récupération de données est agencée pour fournir en sortie ladite demande à ladite antémémoire.

6. Système informatique comportant une mémoire de système (115) et pouvant être connecté à un dispositif de bus USB (330), le système informatique comprenant un contrôleur hôte de bus USB (bus série universel) selon la revendication 1.

7. Procédé de mise en oeuvre d'un contrôleur hôte de bus USB (bus série universel) dans un système informatique relié à un dispositif de bus USB (330), le procédé comprenant :
une récupération (700 à 710) de descripteurs à partir d'une mémoire de système dudit système informatique,
une mémorisation (720) des descripteurs récupérés, et
un traitement (745) de transactions vers et/ou depuis ledit dispositif de bus USB d'après les articles de transactions engendrés en utilisant les descripteurs mémorisés,
dans lequel lesdites étapes de récupération et de traitement sont exécutées de façon asynchrone.

8. Procédé selon la revendication 7, dans lequel l'étape de récupération des descripteurs comprend :
la fourniture en sortie d'une requête (705) pour demander un descripteur, et
la réception (710) du descripteur demandé.

9. Procédé selon la revendication 8, comprenant en outre :
la mémorisation (715) des descripteurs récupérés dans une antémémoire (545) en vue d'un nouvel accès,
dans lequel ladite étape consistant à fournir en sortie ladite requête est exécutée en fournissant en sortie la requête à ladite antémémoire.

10. Procédé selon la revendication 7, comprenant en outre :
la détermination (700) du descripteur qui doit être récupéré, d'après des informations de synchronisation et des réglages de registres.
